# EUROPÄISCHE PATENTANMELDUNG

(11) **EP 3 556 559 A1**
(43) Veröffentlichungstag der Anmeldung: **23.10.2019**
(21) Anmeldenummer: 19168700.3
(22) Anmeldetag: 11.04.2019
(51) Int. Cl.: B41F 31/02, F16J 15/06, F16J 15/16, F16J 15/3276

(54) **DICHTUNGSANORDNUNG ZUR STIRNSEITIGEN ABDICHTUNG EINER FLÜSSIGKEITSSPEICHERNDEN KAMMER**

(30) Priorität: 16.04.2018 DE 202018102074 U
(71) Anmelder: wiguTec Gummitechnologie GmbH & Co. KG, 41540 Dormagen (DE)
(72) Erfinder: Willutzki, Ralf, 51688 Wipperfürth (DE)
(74) Vertreter: Paul & Albrecht Patentanwälte PartG mbB

(57) **Zusammenfassung**

Die vorliegende Erfindung betrifft eine Dichtungsanordnung (1) zur stirnseitigen Abdichtung einer flüssigkeitsspeichernden Kammer, insbesondere einer Rakelkammer, gegenüber einem rotierenden Körper, insbesondere einer Rasterwalze, mit einem Dichtungselement (2) mit einem länglichen Dichtungskörper (3) quaderartiger Grundform, der zwei einander gegenüberliegende Seitenflächen (6, 7), zwei einander gegenüberliegende Stirnflächen (8, 9), eine Oberseite (10) und eine Unterseite (11) aufweist, wobei der Dichtungskörper (3) an seiner Oberseite (10) eine Dichtungsfläche (12) zur Anlage an dem rotierenden Körper umfasst, und einem Dichtungshalter (16), der eine zweiseitig offene Ausnehmung (17) aufweist, in die das Dichtungselement (2) eingesetzt ist, wobei die Ausnehmung (17) Anlageflächen für eine der Seitenflächen (6), die beiden Stirnflächen (8, 9) und die Unterseite (11) des Dichtungskörpers (3) definiert, wobei zwischen dem Dichtungselement (2) und dem Dichtungshalter (16) oberhalb der mit der Seitenfläche (6) des Dichtungskörpers (3) in Kontakt stehenden Anlagefläche (25) ein spaltförmiger Expansionsraum (24) zur Ermöglichung einer freien Verformung des Dichtungskörpers (3) ausgebildet ist.

## Beschreibung

Die vorliegende Erfindung betrifft eine Dichtungsanordnung zur stirnseitigen Abdichtung einer flüssigkeitsspeichernden Kammer, insbesondere einer Rakelkammer, gegenüber einem rotierenden Körper, insbesondere einer Rasterwalze, mit einem Dichtungselement mit einem länglichen Dichtungskörper quaderartiger Grundform, der zwei einander gegenüberliegende Seitenflächen, zwei einander gegenüberliegende Stirnflächen, eine Oberseite und eine Unterseite aufweist, wobei der Dichtungskörper an seiner Oberseite eine Dichtungsfläche zur Anlage an dem rotierenden Körper umfasst, und einem Dichtungshalter, der eine zweiseitig offene Ausnehmung aufweist, in die das Dichtungselement eingesetzt ist, wobei die Ausnehmung Anlageflächen für eine der Seitenflächen, die beiden Stirnflächen und die Unterseite des Dichtungskörpers definiert.

Die Erfindung betrifft ferner ein Dichtungselement zur stirnseitigen Abdichtung einer flüssigkeitsspeichernden Kammer, insbesondere einer Rakelkammer, gegenüber einem rotierenden Körper, insbesondere einer Rasterwalze, mit einem länglichen Dichtungskörper quaderartiger Grundform, der zwei einander gegenüberliegende Seitenflächen, zwei einander gegenüberliegende Stirnflächen, eine Oberseite und eine Unterseite aufweist, wobei der Dichtungskörper an seiner Oberseite eine Dichtungsfläche zur Anlage an dem rotierenden Körper umfasst.

Des Weiteren betrifft die Erfindung einen Dichtungshalter zur Aufnahme eines Dichtungselements für die stirnseitige Abdichtung einer flüssigkeitsspeichernden Kammer, insbesondere einer Rakelkammer, gegenüber eine rotierenden Körper, insbesondere einer Rasterwalze, wobei der Dichtungshalter eine im Wesentlichen quaderförmige, zweiseitig offene Ausnehmung besitzt, die durch eine Seitenwandung, zwei einander gegenüberliegenden Stirnwandungen und eine untere Wandung begrenzt ist.

Derartige Dichtungsanordnungen, die ein Dichtungselement und einen Dichtungshalter zur Aufnahme des Dichtungselements aufweisen, werden insbesondere eingesetzt, um Farbkammern, auch Rakelkammern genannt, von Rotationsdruckmaschinen und insbesondere Flexo-Druckmaschinen stirnseitig abzudichten. Die in einer solchen Rakelkammer enthaltene flüssige Druckfarbe wird auf eine rotierende Farb- oder Druckwalze, die insbesondere als Rasterwalze ausgebildet sein kann, aufgebracht.

Eine Rakelkammer hat üblicher Weise ein längliches Gehäuse, welches parallel zu der Drehachse der Druckwalze ausgerichtet ist und einen zur Druckwalze offenen Innenraum aufweist, der während des Druckbetriebs mit Farbe gefüllt ist. An dem Gehäuse sind zwei Rakelmesser derart angebracht, dass sie den Innenraum über die Länge des Gehäuses randseitig teilweise überdecken und im Betrieb überschüssige Farbe von der Rasterwalze abstreifen. Dazu stehen sie über die Gehäusewand vor und weisen einen definierten und gegebenenfalls einstellbaren Winkel zur Druckwalze auf.

Eine technologische Herausforderung stellt die stirnseitige Abdichtung einer solchen Rakelkammer dar. Eine Dichtung muss an der Umfangsfläche der rotierenden Rasterwalze anliegen und gleichzeitig die stationär angeordneten Rakelmesser seitlich abdichten. Um eine sichere Dichtwirkung zu erzielen, muss die Dichtung mit einer definierten Kraft gegen die Rasterwalze angepresst werden, wodurch ein erheblicher Verschleiß in Folge der Reibung entsteht. Ist die Dichtung zu weich ausgebildet, so können Leckagen auftreten mit der Folge, dass Farbe unkontrolliert aus der Rakelkammer austreten kann. Als besonders leckageanfällig haben sich Stellen herausgestellt, an denen die Dichtung, die Rasterwalze und ein Rakelmesser aneinandergrenzen.

Ein im Hinblick auf seinen Verschleiß optimiertes Dichtungselement wird in der DE 20 2014 101 740 U1 vorgeschlagen. Dieses Dichtungselement besitzt einen länglichen Dichtungskörper quaderartiger Grundform, der zwei einander gegenüberliegende Seitenflächen, die in der Längsrichtung des Dichtungskörpers verlaufen, und zwei einander gegenüberliegende Stirnflächen aufweist. An der Oberseite des Dichtungskörpers ist eine Dichtungsfläche vorgesehen, die einen sich zwischen den Seitenflächen, d.h. über die gesamte Breite des Dichtungskörpers erstreckenden, konkav nach innen gewölbten Dichtungsflächenabschnitt zur Anlage an einer rotierenden Druckwalze aufweist. Konkret ist der nach innen gewölbte Dichtungsflächenabschnitt in Art eines Segments eines Zylindermantels ausgebildet, das quer zur Längsrichtung des Dichtungskörpers ausgerichtet ist, sodass die Wölbung des Dichtungsflächenabschnitts in der Längsrichtung des Dichtungskörpers verläuft.

In der Längsrichtung betrachtet auf den beiden gegenüberliegenden Seiten des nach innen gewölbten Dichtungsflächenabschnitts sind äußere Dichtungsflächenabschnitte vorgesehen, an denen im Betrieb die Rakelmesser zur Anlage kommen. Diese äußeren Dichtungsflächenabschnitte sind als ebene Flächen ausgebildet, die ausgehend von dem konkaven Dichtungsflächenabschnitt zu den Stirnflächen des Dichtungskörpers hin abfallen.

Um der Problematik eines hohen Verschleißes in Folge der Reibung an der Rasterwalze zu begegnen, ist vorgesehen, in die Dichtungsfläche ein Gleitmaterial wie beispielsweise Polytetrafluorethylen (PTFE) einzuvulkanisieren, wodurch eine lange Nutzungsdauer bei hoher mechanischer Stabilität erreicht wird.

Derartige Dichtungselemente werden üblicher Weise in Dichtungshalter eingesetzt, die eine stirnseitige Begrenzung der Rakelkammer bilden und eine geeignete Aufnahme für das Dichtungselement aufweisen. Eine mögliche Ausgestaltung einer solchen Dichtungsanordnung ist in der EP 1 334 830 B1 offenbart. Darin ist vorgesehen, dass ein Dichtungselement in eine im Querschnitt U-förmige Ausnehmung, die in einem Dichtungshalter ausgebildet ist, eingesetzt wird. Der Dichtungshalter wiederum ist verbunden mit der Rakelkammer und bildet ihre stirnseitige Begrenzung. Eine Seite des Dichtungselementes ist dabei in Kontakt mit der in der Rakelkammer vorhandenen Flüssigkeit. Durch diese wird in seitlicher Richtung ein Druck auf das Dichtungselement ausgeübt.

Betrachtet man eine Dichtungsanordnung der eingangs genannten Art, bei der vorgesehen ist, dass der Dichtungskörper mit einer Seitenflächen flächig an einer korrespondierenden Anlagefläche des Dichtungshalters anliegt und die andere Seitenfläche zur Rakelkammer offen ausgebildet ist, so wird deutlich, dass bei wechselnden Drücken in der Rakelkammer unterschiedliche Verformungen des Dichtungskörpers auftreten. Aufgrund der Querkontraktion führt dies dazu, dass bei Druckbeaufschlagung auf seine Seitenfläche sich der Dichtungskörper zu seiner Oberseite hin ausdehnt. Dies hat zur Folge, dass die Anpresskraft auf die Rasterwalze abhängig vom Innendruck in der Rakelkammer ist und somit bei steigendem Druck durch die höhere Reibung ein starker Verschleiß des Dichtungselements auftritt.

Ausgehend von diesem Stand der Technik besteht eine Aufgabe der vorliegenden Erfindung darin, eine Dichtungsanordnung, einen Dichtungshalter und ein Dichtungselement der eingangs genannten Art zu schaffen, der mit einem geringen Verschleiß des Dichtungselements einhergeht.

Diese Aufgabe ist erfindungsgemäß bei einer Dichtungsanordnung der eingangs genannten Art dadurch gelöst, dass zwischen dem Dichtungselement und dem Dichtungshalter oberhalb der mit der Seitenfläche des Dichtungskörpers in Kontakt stehenden Anlagefläche ein spaltförmiger Expansionsraum zur Ermöglichung einer freien Verformung des Dichtungskörpers ausgebildet ist.

Der Erfindung liegt somit die Überlegung zugrunde, im Bereich dieses spaltförmigen Expansionsraums eine freie Ausdehnung des Dichtungskörpers in Richtung seiner druckabgewandten Seite zu ermöglichen und somit zu vermeiden, dass sich der Dichtungskörper nach oben in Richtung des rotierenden Körpers, insbesondere einer Rasterwalze verformt. Es hat sich herausgestellt, dass durch die Ausbildung eines solchen spaltförmigen Expansionsraums, der zwischen dem Dichtungshalter und dem Dichtungskörper in seitlicher Richtung ausgebildet ist, die Verformung in Richtung des rotierenden Körpers weitgehend vermieden werden kann. In Folge dessen erhöht sich bei einem Druckanstieg in der flüssigkeitsspeichernden Kammer nicht die Anpresskraft des Dichtungselements auf den rotierenden Körper, sodass kein erhöhter Verschleiß auftreten kann. Für die erfindungsgemäße Wirkung, dass die Verformung des Dichtungskörpers in Richtung des rotierenden Körpers vermieden werden soll, ist zweckmäßiger Weise der spaltförmige Expansionsraum zum oberen Rand des Dichtungshalters offen ausgebildet. Dies ist erforderlich, da ansonsten im oberen Bereich der Dichtungskörper an dem Dichtungshalter anliegen würde, wodurch die freie Verformung des Dichtungskörpers in seinem nahe an dem rotierenden Körper liegenden Bereich nicht möglich wäre.

In einer bevorzugten Ausgestaltung der Dichtungsanordnung ist der Dichtungskörper mit seinen Stirnflächen zwischen den diesen zugewandten Anlageflächen des Dichtungshalters mit Übermaß eingepasst. Dadurch wird erreicht, dass der Dichtungskörper in der Ausnehmung in seiner Längsrichtung spielfrei positioniert ist und an seinen Stirnflächen eine Reibkraft aufgebracht wird, die beispielsweise im Falle eines Unterdrucks in der flüssigkeitsspeichernden Kammer ein Herausrutschen aus der Ausnehmung verhindern kann.

Gemäß einer Ausführungsform der Erfindung überdeckt der spaltförmige Expansionsraum einen Teilbereich der Seitenfläche des Dichtungskörpers, der zwischen 5% und 40% der mit der Seitenfläche des Dichtungskörpers in Kontakt stehenden Anlagefläche der Ausnehmung entspricht. Ferner ist vorgesehen, dass der spaltförmige Expansionsraum eine Breite von 0,5 mm bis 30 mm, insbesondere von 3 mm bis 20 mm und vorzugsweise von 3 mm bis 15 mm aufweist.

Vorteilhafterweise weist der spaltförmige Expansionsraum eine Tiefe von weniger als 20 mm, vorzugsweise weniger als 15 mm auf. Als besonders günstig hat sich herausgestellt, wenn der spaltförmige Expansionsraum über einen Teillängsabschnitt eine gleichbleibende Tiefe aufweist. Dies gilt insbesondere, wenn sich dieser über den mit dem rotierenden Körper in Kontakt stehenden Längsbereich des Dichtungskörpers erstreckt.

In einer weiteren Ausgestaltung der Erfindung ist vorgesehen, dass der spaltförmige Expansionsraum mindestens teilweise durch eine in dem Dichtungshalter ausgebildete Kavität gebildet wird, die sich vom oberen Rand des Dichtungshalters in diesen hinein erstreckt und zur Ausnehmung hin offen ausgestaltet ist.

Vorzugsweise bildet die im Dichtungshalter ausgebildete Kavität eine planparallele Vertiefung zu der mit der Seitenfläche des Dichtungskörpers in Kontakt stehenden Anlagefläche.

Des Weiteren kann der spaltförmige Expansionsraum mindestens teilweise durch eine in dem Dichtungskörper ausgebildete Kavität gebildet werden, die sich von der Oberseite in den Dichtungskörper hinein erstreckt und zu der an dem Dichtungshalter anliegenden Seitenfläche hin offen ausgestaltet ist.

Die im Dichtungskörper ausgebildete Kavität kann eine planparallele Vertiefung zu dessen Seitenfläche bilden.

Diesen Ausgestaltungen liegt die Überlegung zugrunde, in dem Dichtungshalter und/oder in dem Dichtungskörper eine Kavität auszubilden, die den spaltförmigen Expansionsraum zwischen dem Dichtungshalter und dem Dichtungskörper bildet. Der spaltförmige Expansionsraum kann somit entweder ausschließlich durch eine im Dichtungshalter ausgebildete Kavität oder ausschließlich durch eine im Dichtungskörper ausgebildete Kavität oder durch im Dichtungshalter und im Dichtungskörper ausgebildete, im Wesentlichen deckungsgleich angeordnete Kavitäten gebildet werden. Unabhängig davon, auf welche Art der spaltförmige Expansionsraum ausgebildet ist, wird die erfindungsgemäße Wirkung erzielt, da in jedem Fall der Dichtungskörper die Möglichkeit hat, sich in seitlicher Richtung frei in den Expansionsraum hinein zu verformen.

Ferner kann vorgesehen sein, dass die Dichtungsanordnung ein sich quer zum Dichtungskörper erstreckendes längliches Gehäuse umfasst, welches mit einer Stirnseite an der dem Dichtungskörper abgewandten Seitenfläche des Dichtungskörpers anliegt, wobei das Gehäuse eine nach oben offene, sich in seiner Längsrichtung durchgehend erstreckende und einen flüssigkeitsspeichernden Raum definierende Aussparung aufweist, wobei in Längsrichtung des Gehäuses betrachtet die vom spaltförmigen Raum und von flüssigkeitsspeichernden Raum überdeckten Flächen deckungsgleich sind. Es hat sich gezeigt, dass eine derartige Ausgestaltung, bei der der spaltförmige Expansionsraum auf der einen Seite des Dichtungskörpers und der flüssigkeitsspeichernde Raum auf der anderen Seite des Dichtungskörpers die gleichen Flächen überdecken, besonders günstig im Hinblick auf eine vom Druck in dem flüssigkeitsspeichernden Raum unabhängige Verformung in Richtung des rotierenden Körpers ist.

Für weitere Ausgestaltungen des Dichtungselements und des Dichtungshalters der eingangs genannten Dichtungsanordnung wird auch auf die nachstehenden Ausführungen verwiesen.

Ferner schafft die Erfindung ein Dichtungselement der eingangs genannten Art, wobei in der Oberseite des Dichtungskörpers eine zu einer seiner Seitenflächen offene Kavität ausgebildet ist, die sich bis zu einer Tiefe von mindestens 6 mm, vorzugsweise 10 mm, oder bis zu einer Tiefe, die mindestens 15% der Höhe des Dichtungskörpers entspricht, erstreckt. Vorzugsweise bildet die Kavität eine planparallele Vertiefung zu der Seitenfläche des Dichtu ngskörpers.

Dieser Ausgestaltung eines gattungsgemäßen Dichtungselements liegt die gleiche Überlegung zugrunde, nämlich durch die Kavität einen spaltförmigen Expansionsraum zu bilden, in den sich das Dichtungselement bei Druckbeaufschlagung in der flüssigkeitsspeichernden Kammer in dem zum rotierenden Körper zugewandten Bereich frei hinein verformen kann. Ein solches Dichtungselement kann auch in vorhandenen Rakelkammern verwendet werden, um die der Erfindung zugrunde liegende Problematik zu lösen, so dass bei einer Verwendung in einer Dichtungsanordnung, wie sie zuvor beschrieben wurde, keine Veränderung am vorhandenen Dichtungshalter oder ein Austausch dessen erforderlich ist, um einen spaltförmigen Expansionsraum zu schaffen. Dies ermöglicht es, im Gegensatz zu der Ausbildung einer Kavität im Dichtungshalter, lediglich durch Austausch des Dichtungselements kostengünstig bei vorhandenen Systemen eine weitgehend vom Druck in der flüssigkeitsspeichernden Kammer unabhängige Anpresskraft auf den rotierenden Körper zu erzielen. Eine bestimmte Mindesttiefe der Kavität ist dabei erforderlich, um bei der Verwendung des Dichtungselements in einer Dichtungsanordnung einen spaltförmigen Expansionsraum entstehen zu lassen, da das Dichtungselement zum rotierenden Körper hin von dem Dichtungshalter vorragt.

In bevorzugter Ausgestaltung erstreckt sich die Kavität über einen Anteil von mindestens 5% und höchstens 40% der Seitenfläche des Dichtungskörpers. Die Kavität kann eine Breite von 0,5 bis 30 mm, insbesondere von 3 bis 20 mm und bevorzugt von 3 bis 15 mm aufweisen. Ferner kann die Tiefe der Kavität weniger als 20 mm, vorzugsweise weniger als 15 mm oder weniger als 50% der Höhe des Dichtungskörpers betragen. Eine derartige Dimensionierung der Kavität hat sich als vorteilhaft herausgestellt, um im üblichen Druckbereich einer flüssigkeitsspeichernden Kammer, insbesondere einer Rakelkammer, eine gleichmäßige Anpresskraft auf den rotierenden Körper, insbesondere auf eine Rasterwalze, zu erzielen.

Gemäß einer weiteren Ausführungsform der Erfindung besteht der Dichtungskörper zumindest im Bereich der Dichtungsfläche aus einem vulkanisierbaren Material und ist ein Gleitmaterial in die Dichtungsfläche einvulkanisiert. Durch eine Einvulkanisierung des Gleitmaterials in die Dichtungsfläche wird im Unterschied zu einer bloßen Beschichtung der Dichtungsfläche das Gleitmaterial mit dem Material des Dichtungskörpers vernetzt. Die Einvulkanisierung führt also gegenüber einer Beschichtung zu einer erhöhten mechanischen Stabilität und einer längeren Nutzungsdauer bis zum vollständigen Abrieb des Gleitmaterials.

Vorteilhafterweise kann das Gleitmaterial Polytetrafluorethylen (PTFE) aufweisen oder daraus bestehen. Polytetrafluorethylen (PTFE) besitzt eine hohe Abriebbeständigkeit und Wärmeleitfähigkeit, sowie einen sehr niedrigen Gleitreibungskoeffizienten. Auch der Dichtungskörper kann pulverförmiges Polytetrafluorethylen (PTFE) aufweisen, um bei vollständigem Abrieb des Gleitmaterials noch Notlaufeigenschaften sicherzustellen.

In bevorzugter Ausgestaltung ist das Gleitmaterial in die Dichtungsfläche mit einer Eindringtiefe von wenigstens 0,2 mm, insbesondere wenigstens 0,3 mm einvulkanisiert. Ferner kann der Dichtungskörper einen Grundkörper aus einem elastischen Material und ein Formteil umfassen, wobei der Grundkörper und das Formteil fest miteinander verbunden, insbesondere verklebt sind. Beispielsweise kann in der Oberseite des Grundkörpers wenigstens eine Ausnehmung ausgebildet sein, in die ein korrespondierender, von der Unterseite des Formteils abragender Vorsprung eingreift, um das Formteil formschlüssig mit dem Grundkörper zu verbinden und an diesem zu positionieren. Diese Ausnehmungen und die korrespondierenden Vorsprünge können sich über die gesamte Breite des Grundkörpers erstrecken. Prinzipiell ist es jedoch auch denkbar, den Dichtungskörper einteilig auszubilden und mit einer Dichtungsfläche zu versehen.

Zudem schafft die vorliegende Erfindung einen Dichtungshalter der eingangs genannten Art, wobei im Dichtungshalter eine Kavität ausgebildet ist, die sich von seinem oberen Rand in diese hinein erstreckt und zur Seitenwandung der Ausnehmung hin offen ausgestaltet ist. Vorzugsweise wird der Dichtungshalter für eine Dichtungsanordnung, wie sie zuvor bereits beschrieben wurde, und/oder in Verbindung mit einem Dichtungselement, wie es ebenfalls zuvor beschrieben wurde, verwendet.

Dem liegt die Überlegung zugrunde, dass durch die Kavität ein spaltförmiger Expansionsraum zwischen dem Dichtungshalter und dem einzusetzenden Dichtungskörper gebildet wird, in Folge derer eine freie Ausdehnung des Dichtungskörpers in seitlicher Richtung in dem zum rotierenden Körper zugewandten Bereich ermöglicht wird.

Vorzugsweise bildet die Kavität eine planparallele Vertiefung zu der Seitenwandung der Ausnehmung des Dichtungshalters. Die Kavität kann sich über einen Anteil von mindesten 5% und höchstens 40% der Fläche der Seitenwandung der Ausnehmung erstrecken.

In bevorzugter Ausgestaltung des Dichtungshalters weist die Kavität eine Breite von 0,5 mm bis 30 mm, insbesondere vom 3 mm bis 20 mm und bevorzugt vom 3 mm bis 15 mm auf. Ferner kann die Tiefe der Kavität weniger als 20 mm, vorzugsweise weniger als 15 mm betragen.

In an sich bekannter Weise kann der Dichtungshalter aus einem metallischen Werkstoff, vorzugsweise aus einem Stahlwerkstoff bestehen. Denkbar ist auch, den Dichtungshalter aus einem anderen Material auszugestalten, beispielsweise einer Aluminiumlegierung oder einem Kunststoff, wie zum Beispiel Polyoxymethylen (POM) oder einem faserverstärkten Kunststoff, insbesondere einem kohlenstofffaserverstärkten Kunststoff. Der Dichtungshalter kann ferner Bohrungen, insbesondere sich zwischen seinen Seitenflächen erstreckende Bohrungen zum Einbringen von Befestigungselementen zur lösbaren Fixierung an der flüssigkeitsspeichernden Kammer aufweisen. Der Dichtungshalter kann dabei einteilig, aber auch mehrteilig ausgebildet sein. Insbesondere kann der Dichtungshalter aus mehreren, sich parallel zur Seitenwandung der Ausnehmung erstreckenden blechförmigen oder plattenförmigen Bauteilen vorzugsweise unterschiedlicher Dicke zusammengesetzt sein.

Hinsichtlich weiterer vorteilhafter Ausgestaltungen der Erfindung wird auf die Unteransprüche sowie auf die nachfolgende Beschreibung eines Ausführungsbeispiels unter Bezugnahme auf die beiliegende Zeichnung verwiesen.

In der Zeichnung zeigen
- Figur 1: eine Seitenansicht einer erfindungsgemäßen Dichtungsanordnung von der im Betrieb der flüssigkeitsspeichernden Kammer zugewandten Seite,
- Figur 2: eine Schnittansicht der Dichtungsanordnung entlang der Linie II-II in Figur 1,
- Figur 3: eine Detailschnittansicht der Dichtungsanordnung über den in Figur 2 dargestellten Bereich X,
- Figur 4: einen Dichtungshalter der in der in Figur 1 gezeigten Dichtungsanordnung in isometrischer Darstellung,
- Figur 5: eine Detailschnittansicht der Dichtungsanordnung in einer alternativen Ausführungsform,
- Figur 6: eine Detailschnittansicht der Dichtungsanordnung in einer weiteren alternativen Ausführungsform,
- Figur 7: eine Schnittansicht einer alternativen Dichtungsanordnung, und
- Figur 8: eine isometrische Teilansicht der in Figur 7 dargestellten Dichtungsanordnung.

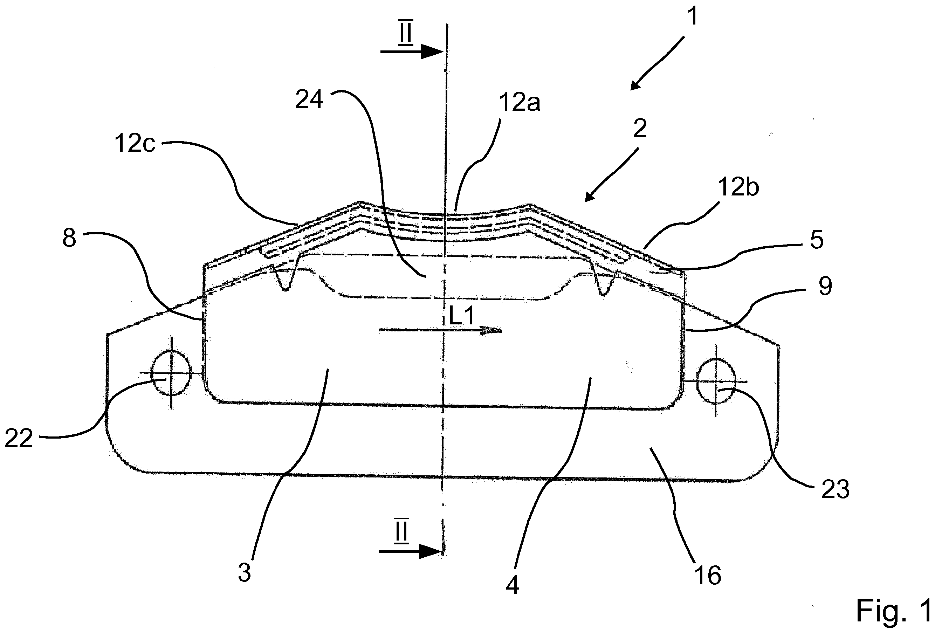

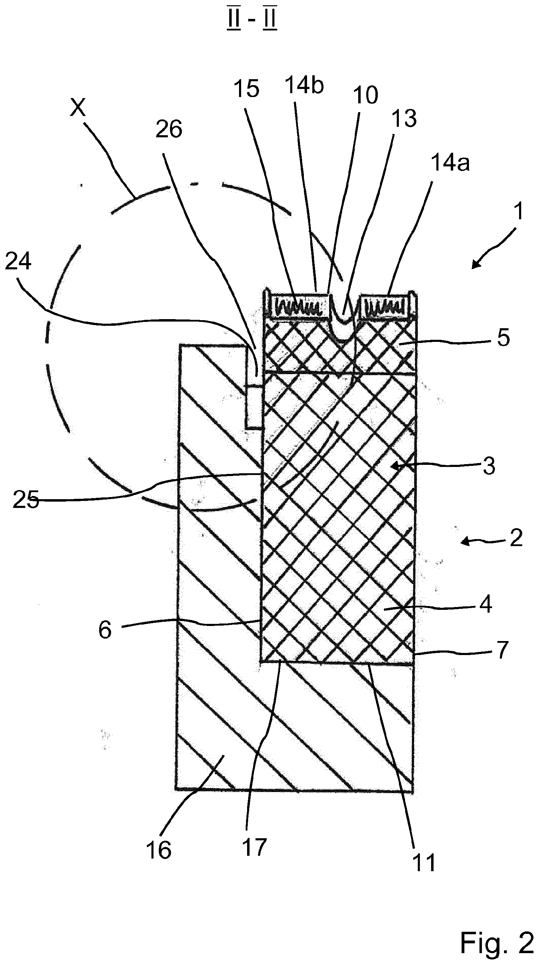

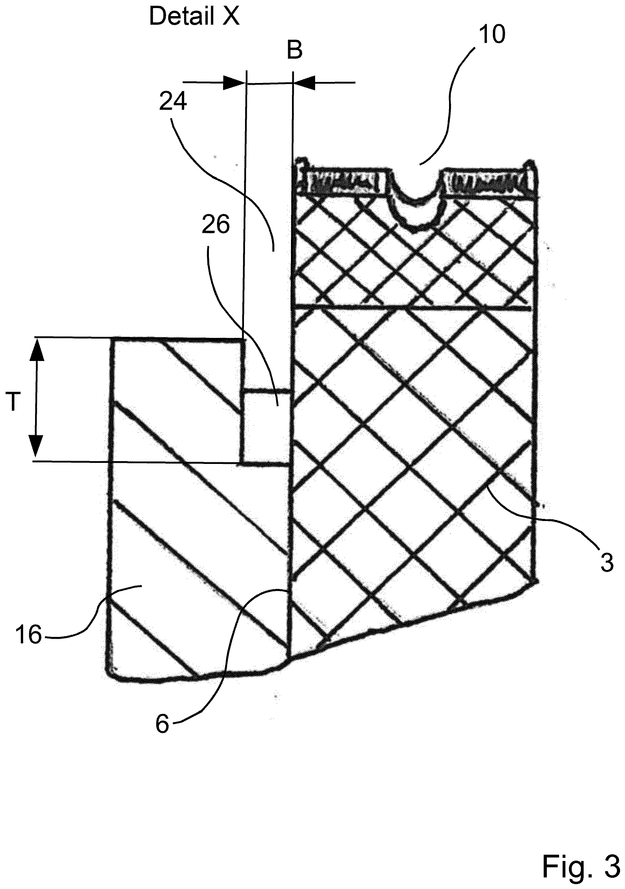

Die Figuren 1 bis 3 zeigen eine erfindungsgemäße Dichtungsanordnung 1 zur stirnseitigen Abdichtung einer Rakelkammer gegenüber einer rotierenden Rasterwalze.

Die Dichtungsanordnung 1 besitzt ein Dichtungselement 2 mit einem länglichen Dichtungskörper 3 quaderartiger Grundform, der einen unteren Grundkörper 4 und ein mit diesem verklebtes oberes Formteil 5 umfasst. Der Grundkörper 3 besteht aus einem elastischen, insbesondere geschäumten Material. Das Formteil 4 besteht aus einem härteren und weniger elastischen Material als der Grundkörper 3, insbesondere aus Gummi oder Kautschuk. Prinzipiell ist es auch möglich, den Dichtungskörper 3 einteilig auszubilden.

Der Dichtungskörper 3 weist zwei einander gegenüberliegende Seitenflächen 6, 7, zwei einander gegenüberliegende Stirnflächen 8, 9, eine Oberseite 10 und eine Unterseite 11 auf. An seiner Oberseite 10 umfasst der Dichtungskörper 3 eine Dichtungsfläche 12 zur Anlage an dem rotierenden Körper.

Die Dichtungsfläche 12 weist in Längsrichtung L1 drei Abschnitte auf. Der mittlere Abschnitt 12a ist nach oben konkav in Form eines Segments eines Zylindermantels ausgebildet und zur Anlage an der nicht dargestellten Rasterwalze vorgesehen. Die beiden äußeren Abschnitte 12b, 12c sind als ebene, zu den Stirnflächen 8, 9 hin abfallende Flächen ausgebildet und zur Anlage an ebenfalls nicht dargestellten Rakelmessern vorgesehen.

In einem Teilbereich ist die Dichtungsfläche 12 in Längsrichtung L1 durch eine kanalförmige Ausnehmung 13 in zwei stegförmige Teilflächen 14a, 14b unterteilt und im Bereich ihrer stegförmigen Teilflächen 14a, 14b mit einem Gleitmaterial 15 versehen, welches in die Dichtungsfläche 12 einvulkanisiert ist. Das Gleitmaterial 15 besteht vorliegend aus Polytetrafluorethylen (PTFE).

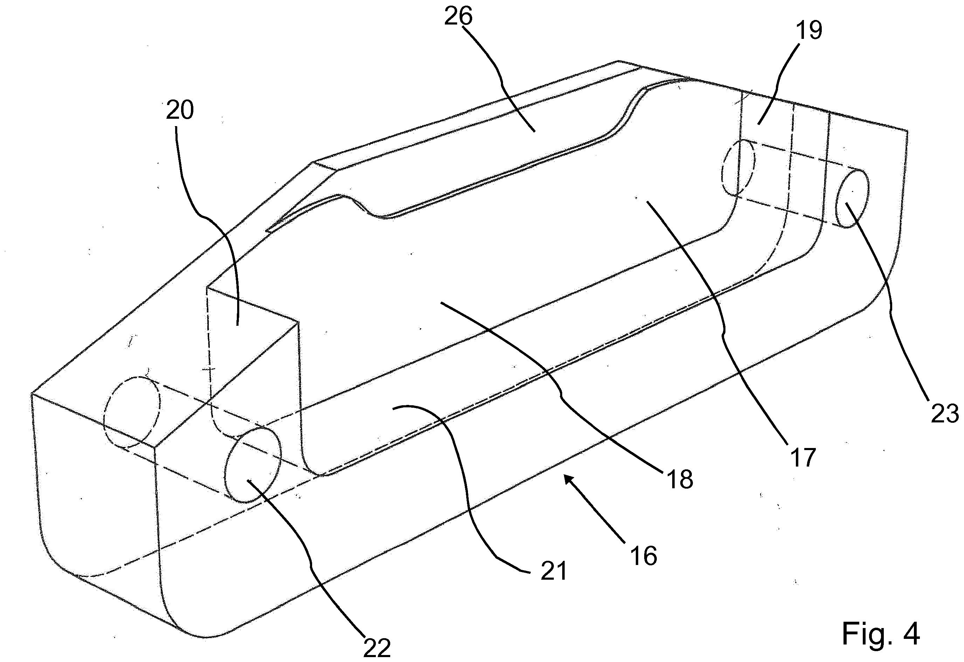

Die Dichtungsanordnung 1 besitzt ferner einen in Figur 4 als Einzelteil dargestellten Dichtungshalter 16, der eine im Wesentlichen quaderförmige, zweiseitig offene Ausnehmung 17 besitzt. Diese ist durch eine im Betrieb der Rakelkammer zugewandte Seitenwandung 18, zwei einander gegenüberliegenden Stirnwandungen 19, 20 und eine untere Wandung 21 begrenzt.

Der Dichtungshalter 16 besteht im vorliegenden Fall aus einem Stahlwerkstoff, und weist zwei beiderseits der Ausnehmung 17 angeordnete, diesen vollständig durchdringende Bohrungen 22, 23 zum Einbringen von Befestigungselementen zur lösbaren Fixierung an der Rakelkammer auf. Prinzipiell ist es auch denkbar, den Dichtungshalter 16 aus einem anderen Material auszugestalten, beispielsweise einer Aluminiumlegierung oder einem Kunststoff. Der Dichtungshalter 16 ist einteilig ausgebildet, generell kann dieser jedoch auch mehrteilig ausgebildet sein.

Bei der Dichtungsanordnung 1 ist das Dichtungselement 2 in den Dichtungshalter 16 eingesetzt. Die zweiseitig offene Ausnehmung 17 des Dichtungshalters 16 definiert Anlageflächen für die Seitenfläche 6, die beiden Stirnflächen 8, 9 und die Unterseite 11 des Dichtungskörpers 3. Zwischen den seinen Stirnflächen 8, 9 zugewandten Anlageflächen des Dichtungshalters 16 ist der Dichtungskörper 3 mit Übermaß eingepasst.

Zwischen dem Dichtungselement 2 und dem Dichtungshalter 16 ist ein spaltförmiger Expansionsraum 24 oberhalb der mit der Seitenfläche 6 des Dichtungskörpers 3 in Kontakt stehenden Anlagefläche 25 ausgebildet. Der spaltförmige Expansionsraum 24 überdeckt einen Teilbereich der Seitenfläche 6 des Dichtungskörpers 3, der etwa 10% der mit der Seitenfläche 6 in Kontakt stehenden Anlagefläche 25 entspricht. Der spaltförmige Expansionsraum 24 weist eine Breite B von 1 mm und eine maximale Tiefe T von 12 mm auf. In einem Längsbereich, über den sich der mittlere Abschnitt 12a der Dichtungsfläche 12 erstreckt, ist die Tiefe des spaltförmigen Expansionsraums 24 konstant.

Bei der vorliegenden Ausführungsform wird der Expansionsraum 24 durch eine in dem Dichtungshalter 16 ausgebildete Kavität 26 gebildet, die sich von seinem oberen Rand in diesen hinein erstreckt und zur Ausnehmung 17 offen ausgestaltet ist. Die Kavität 26 bildet dabei eine planparallele Vertiefung zu der mit der Seitenfläche 6 des Dichtungskörpers 3 in Kontakt stehenden Anlagefläche 25. Über einen Teilbereich in Längsrichtung L1 ist die Tiefe der Kavität 26 gleichbleibend.

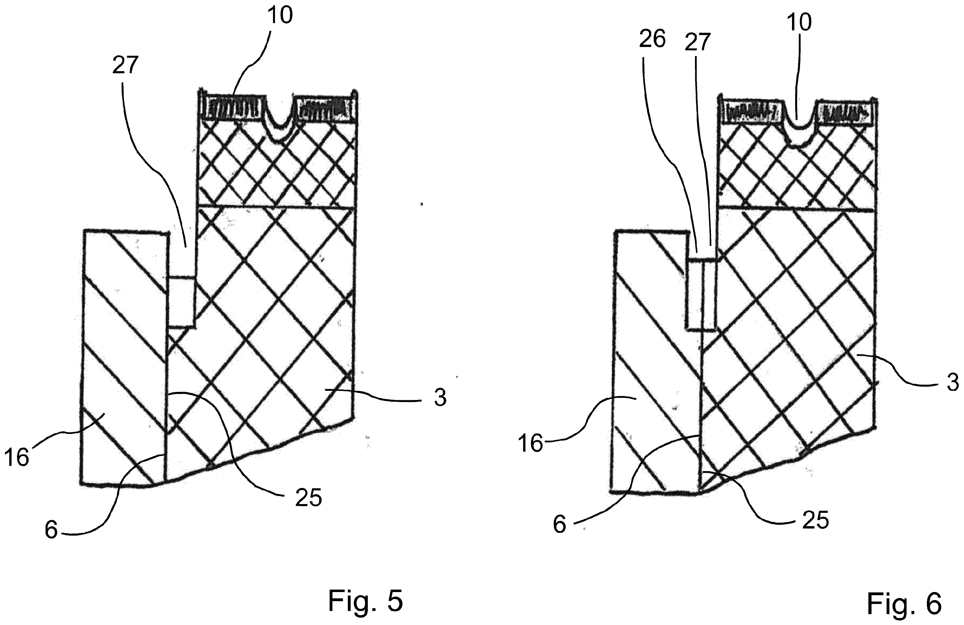

In der Figur 5 ist eine alternative Ausführungsform dargestellt, die sich von der zuvor beschriebenen lediglich durch die Ausgestaltung des spaltförmigen Expansionsraums 24 unterscheidet. Der spaltförmige Expansionsraum 24 wird hier durch eine Kavität 27 gebildet, die im Dichtungskörper 3 ausgebildet ist. Diese erstreckt sich von seiner Oberseite 10 in diesen hinein und ist zu der am Dichtungshalter 16 anliegenden Seitenfläche 6 hin offen ausgestaltet. Die Kavität 27 bildet ebenfalls eine planparallele Vertiefung zu der Seitenfläche 6 des Dichtungskörpers 3.

Bei der in Figur 6 dargestellten Ausführungsform ist demgegenüber vorgesehen, dass der spaltförmige Expansionsraum 24 durch eine im Dichtungshalter 16 ausgebildete Kavität 26 und durch eine im Dichtungskörper 3 ausgebildete Kavität 27 gebildet wird. Die beiden Kavitäten 26, 27 erstrecken sich jeweils von dem oberen Rand des Dichtungshalters 16, bzw. der Oberseite 10 des Dichtungskörpers 3 in diese hinein bis zu einer gemeinsamen Tiefe T. Die im Dichtungshalter 16 ausgebildete Kavität 26 ist zu der Ausnehmung 17 hin offen ausgestaltet, die im Dichtungskörper ausgebildete Kavität 27 ist zu der am Dichtungshalter 16 anliegenden Seitenfläche 6 hin offen ausgestaltet.

Der spaltförmige Expansionsraum 24 dient dazu, eine freie Verformung des in die Ausnehmung 17 eingesetzten Dichtungskörpers 3 in der Nähe der mit der Rasterwalze in Kontakt stehenden Dichtungsfläche 12 des Dichtungskörpers 3 zu ermöglichen, wenn die der Rakelkammer zugewandte Seitenfläche 7 mit Druck beaufschlagt wird. Dadurch wird vermieden, dass sich der Dichtungskörper 3 wesentlich in Richtung der Rasterwalze verformt und es somit zu einem starken, insbesondere vom Innendruck der flüssigkeitsspeichernden Kammer abhängigen Verschleiß der Dichtungsfläche 12 kommt.

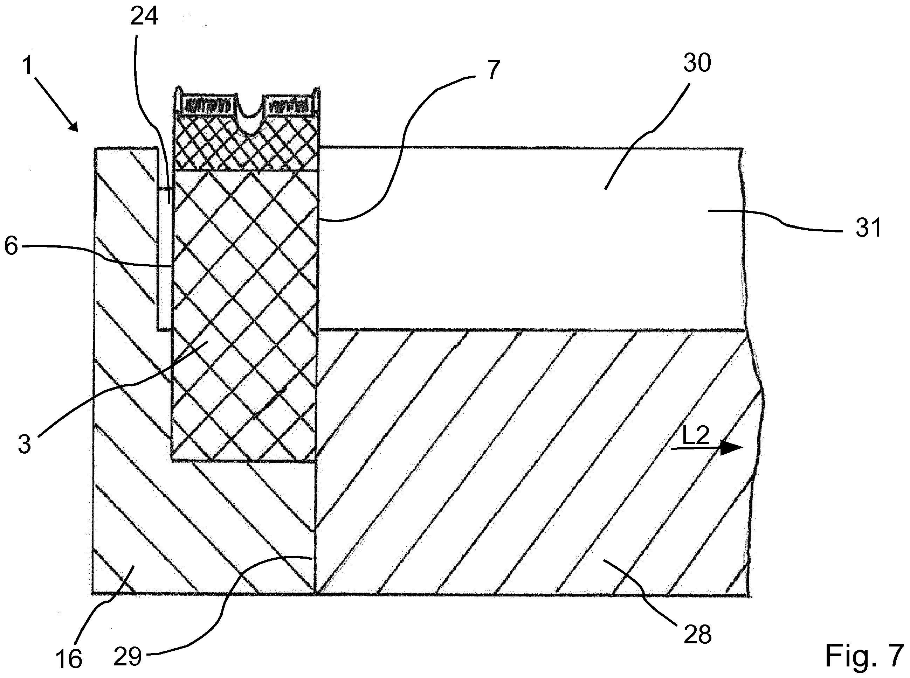

Die Figur 7 zeigt eine alternative Dichtungsanordnung 1 gemäß der vorliegenden Erfindung, die sich hinsichtlich der Erstreckung des spaltförmigen Expansionsraums 24 von den bisherigen Ausführungsbeispielen unterscheidet. Die Dichtungsanordnung 1 umfasst neben dem Dichtungselement 2 und dem Dichtungshalter 16 ein sich quer zur Längsrichtung L1 des Dichtungskörpers 3 erstreckendes längliches Gehäuse 28. Dieses liegt mit einer Stirnseite 29 an der dem Dichtungshalter 16 abgewandten Seitenfläche 7 des Dichtungskörpers 3 an. Das Gehäuse 28 weist eine nach oben offene, sich in seiner Längsrichtung L2 durchgehend erstreckende und einen flüssigkeitsspeichernden Raum 30 definierende Aussparung 31 auf. Die vom spaltförmigen Expansionsraum 24 und vom flüssigkeitsspeichernden Raum 30 überdeckten Flächen sind in Längsrichtung des Gehäuses 28 betrachtet gleich.

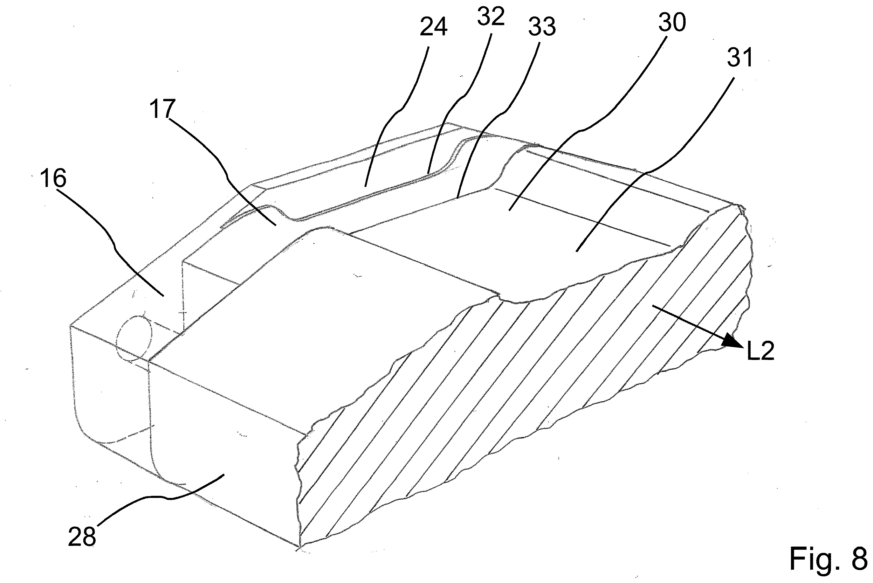

In Figur 8 ist die Dichtungsanordnung 1 aus Figur 7 dargestellt, wobei das Dichtungselement 2 ausgeblendet ist. Quer zur Längsrichtung L1 des nicht dargestellten Dichtungskörpers 3 erstreckt sich das längliche Gehäuse 28, welches mit seiner Stirnseite 29 an dem Dichtungshalter 16 anliegt. Die im Gehäuse 28 ausgebildete Aussparung 31 erstreckt sich in der Längsrichtung L2 des Gehäuses und definiert den flüssigkeitsspeichernden Raum 30. Es ist zu erkennen, dass in Längsrichtung L2 betrachtet die vom spaltförmigen Expansionsraum 24 und vom flüssigkeitsspeichernden Raum 30 überdeckten Flächen deckungsgleich sind. Mit anderen Worten erstreckt sich die Kontur 32 des spaltförmigen Expansionsraums 24 auf gleicher Höhe wie die und parallel zu der Kontur 33 des flüssigkeitsspeichernden Raums 30.

### Bezugszeichenliste:

- 1: Dichtungsanordnung
- 2: Dichtungselement
- 3: Dichtungskörper
- 4: Grundkörper
- 5: Formteil
- 6: Seitenfläche
- 7: Seitenfläche
- 8: Stirnfläche
- 9: Stirnfläche
- 10: Oberseite
- 11: Unterseite
- 12: Dichtungsfläche
- 12a, 12b, 12c: Abschnitte der Dichtungsfläche
- 13: kanalförmige Ausnehmung
- 14a, 14b: stegförmige Teilflächen
- 15: Gleitmaterial
- 16: Dichtungshalter
- 17: Ausnehmung
- 18: Seitenwandung
- 19: Stirnwandung
- 20: Stirnwandung
- 21: untere Wandung
- 22: Bohrung
- 23: Bohrung
- 24: spaltförmiger Expansionsraum
- 25: Anlagefläche
- 26: Kavität
- 27: Kavität
- 28: Gehäuse
- 29: Stirnseite des Gehäuses
- 30: flüssigkeitsspeichernder Raum
- 31: Aussparung
- 32: Kontur des spaltförmigen Expansionsraums
- 33: Kontur des flüssigkeitsspeichernden Raums
- L1: Längsrichtung des Dichtungskörpers
- L2: Längsrichtung des Gehäuses
- B: Breite
- T: Tiefe

## Patentansprüche

1. Dichtungsanordnung (1) zur stirnseitigen Abdichtung einer flüssigkeitsspeichernden Kammer, insbesondere einer Rakelkammer, gegenüber einem rotierenden Körper, insbesondere einer Rasterwalze, mit
einem Dichtungselement (2) mit einem länglichen Dichtungskörper (3) quaderartiger Grundform, der zwei einander gegenüberliegende Seitenflächen (6, 7), zwei einander gegenüberliegende Stirnflächen (8, 9), eine Oberseite (10) und eine Unterseite (11) aufweist,
wobei der Dichtungskörper (3) an seiner Oberseite (10) eine Dichtungsfläche (12) zur Anlage an dem rotierenden Körper umfasst, und
einem Dichtungshalter (16), der eine zweiseitig offene Ausnehmung (17) aufweist, in die das Dichtungselement (2) eingesetzt ist, wobei die Ausnehmung (17) Anlageflächen für eine der Seitenflächen (6), die beiden Stirnflächen (8, 9) und die Unterseite (11) des Dichtungskörpers (3) definiert,
**dadurch gekennzeichnet, dass**
zwischen dem Dichtungselement (2) und dem Dichtungshalter (16) oberhalb der mit der Seitenfläche (6) des Dichtungskörpers (3) in Kontakt stehenden Anlagefläche (25) ein spaltförmiger Expansionsraum (24) zur Ermöglichung einer freien Verformung des Dichtungskörpers (3) ausgebildet ist.

2. Dichtungsanordnung (1) nach Anspruch 1, **dadurch gekennzeichnet, dass** der Dichtungskörper (3) mit seinen Stirnseiten (8, 9) zwischen den diesen zugewandten Anlageflächen des Dichtungshalters (16) mit Übermaß eingepasst ist.

3. Dichtungsanordnung (1) nach Anspruch 1 oder 2, **dadurch gekennzeichnet, dass** der spaltförmige Expansionsraum (24) einen Teilbereich der Seitenfläche (6) des Dichtungskörpers (3) überdeckt, der zwischen 5 % und 40 % der mit der Seitenfläche (6) in Kontakt stehenden Anlagefläche (25) entspricht, und/oder dass der spaltförmige Expansionsraum (24) eine Breite (B) von 0,5 mm bis 30 mm, insbesondere von 3 mm bis 20 mm und vorzugsweise von 3 mm bis 15 mm aufweist, und/oder dass der spaltförmige Expansionsraum (24) eine Tiefe (T) von weniger als 20 mm, vorzugsweise weniger als 15 mm aufweist.

4. Dichtungsanordnung (1) nach einem der vorherigen Ansprüche, **dadurch gekennzeichnet, dass** der spaltförmige Expansionsraum (24) mindestens teilweise durch eine in dem Dichtungshalter (16) ausgebildete Kavität (26) gebildet wird, die sich vom oberen Rand des Dichtungshalters (16) in diesen hinein erstreckt und zur Ausnehmung (17) hin offen ausgestaltet ist, wobei insbesondere die im Dichtungshalter (16) ausgebildete Kavität (26) eine planparallele Vertiefung zu der mit der Seitenfläche (6) des Dichtungskörpers (3) in Kontakt stehenden Anlagefläche (25) bildet.

5. Dichtungsanordnung (1) nach einem der vorherigen Ansprüche, **dadurch gekennzeichnet, dass** der spaltförmige Expansionsraum (24) mindestens teilweise durch eine in dem Dichtungskörper (3) ausgebildete Kavität (27) gebildet wird, die sich von der Oberseite (10) in den Dichtungskörper (3) hinein erstreckt und zur an dem Dichtungshalter (16) anliegenden Seitenfläche (6) hin offen ausgestaltet ist, wobei insbesondere die im Dichtungskörper (3) ausgebildete Kavität (27) eine planparallele Vertiefung zu der Seitenfläche (6) bildet.

6. Dichtungsanordnung (1) nach einem der vorherigen Ansprüche, wobei die Dichtungsanordnung (1) ferner ein sich quer zum Dichtungskörper (3) erstreckendes längliches Gehäuse (28) umfasst, welches mit einer Stirnseite (29) an der dem Dichtungshalter (16) abgewandten Seitenfläche (7) des Dichtungskörpers (3) anliegt,
wobei das Gehäuse (28) eine nach oben offene, sich in seiner Längsrichtung (L2) durchgehend erstreckende und einen flüssigkeitsspeichernden Raum (30) definierende Aussparung (31) aufweist, **dadurch gekennzeichnet, dass**
in Längsrichtung (L2) des Gehäuses (28) betrachtet die vom spaltförmigen Expansionsraum (24) und vom flüssigkeitsspeichernden Raum (30) überdeckten Flächen deckungsgleich sind.

7. Dichtungselement (2) zur stirnseitigen Abdichtung einer flüssigkeitsspeichernden Kammer, insbesondere einer Rakelkammer, gegenüber einem rotierenden Körper, insbesondere einer Rasterwalze, vorzugsweise zur Verwendung in einer Dichtungsanordnung (1) nach einem der Ansprüche 1 bis 10, mit
einem länglichen Dichtungskörper (3) quaderartiger Grundform, der zwei einander gegenüberliegende Seitenflächen (6, 7), zwei einander gegenüberliegende Stirnflächen (8, 9), eine Oberseite (10) und eine Unterseite (11) aufweist,
wobei der Dichtungskörper (3) an seiner Oberseite (10) eine Dichtungsfläche (12) zur Anlage an dem rotierenden Körper umfasst,
**dadurch gekennzeichnet, dass** in der Oberseite (10) eine zu einer der Seitenflächen (6) offene Kavität (27) ausgebildet ist, die sich bis zu einer Tiefe (T) von mindestens 6 mm, vorzugsweise mindestens 10 mm, oder bis zu einer Tiefe (T), die mindestens 15 % der Höhe des Dichtungskörpers (3) entspricht, erstreckt.

8. Dichtungselement (2) nach Anspruch 7, **dadurch gekennzeichnet, dass** die Kavität (27) eine planparallele Vertiefung zu der Seitenfläche (6) des Dichtungskörpers (6) bildet, und/oder dass sich die Kavität (27) über einen Anteil von mindestens 5% und höchstens 40% der Seitenfläche (6) des Dichtungskörpers (3) erstreckt, und/oder dass die Tiefe (T) der Kavität weniger als 20 mm, vorzugsweise weniger als 15 mm, oder weniger als 50% der Höhe des Dichtungskörpers (3) beträgt, und/oder dass die Kavität (27) eine Breite (B) von 0,5 mm bis 30 mm, insbesondere von 3 mm bis 20 mm und bevorzugt 3 mm bis 15 mm aufweist.

9. Dichtungselement (2) nach Anspruch 7 oder 8, **dadurch gekennzeichnet, dass** der Dichtungskörper (3) zumindest im Bereich der Dichtungsfläche (12) aus einem vulkanisierbaren Material besteht und ein Gleitmaterial (15) in die Dichtungsfläche (12) einvulkanisiert ist, wobei insbesondere das Gleitmaterial (15) Polytetrafluorethylen (PTFE) aufweist oder daraus besteht, und/oder **dass** das Gleitmaterial (15) in die Dichtungsfläche (12) mit einer Eindringtiefe von wenigstens 0,2 mm, insbesondere wenigstens 0,3 mm einvulkanisiert ist.

10. Dichtungselement (2) nach einem der Ansprüche 7 bis 9, **dadurch gekennzeichnet, dass** der Dichtungskörper (3) einen Grundkörper (4) aus einem elastischen Material und ein Formteil (5) umfasst, wobei der Grundkörper (4) und das Formteil (5) fest miteinander verbunden, insbesondere verklebt sind.

11. Dichtungshalter (16) zur Aufnahme eines Dichtungselements (2) für die stirnseitige Abdichtung einer flüssigkeitsspeichernden Kammer, insbesondere einer Rakelkammer, gegenüber einem rotierenden Körper, insbesondere einer Rasterwalze, vorzugsweise zur Verwendung in einer Dichtungsanordnung (1) nach einem der Ansprüche 1 bis 10, und/oder mit einem Dichtungselement (2) nach einem der Ansprüche 7 bis 10,
wobei der Dichtungshalter (16) eine im Wesentlichen quaderförmige, zweiseitig offene Ausnehmung (17) besitzt, die durch eine Seitenwandung (18), zwei einander gegenüberliegende Stirnwandungen (19, 20) und eine untere Wandung (21) begrenzt ist,
**dadurch gekennzeichnet, dass** im Dichtungshalter (16) eine Kavität (26) ausgebildet ist, die sich von einem oberen Rand des Dichtungshalters (16) in diesen hinein erstreckt und zur Seitenwandung (18) der Ausnehmung (17) hin offen ausgestaltet ist.

12. Dichtungshalter (16) nach Anspruch 11, **dadurch gekennzeichnet, dass** die Kavität (26) eine planparallele Vertiefung zu der Seitenwandung (18) der Ausnehmung (17) des Dichtungshalters (16) bildet, und/oder dass sich die Kavität (26) über einen Anteil von mindestens 5 % und höchstens 40 % der Fläche der Seitenwandung (18) der Ausnehmung (17) erstreckt, und/oder **dass** die Tiefe (T) der Kavität (26) weniger als 20 mm, vorzugsweise weniger als 15 mm beträgt, und/oder dass die Kavität (26) eine Breite (B) von 0,5 mm bis 30 mm, insbesondere von 3 mm bis 20 mm und bevorzugt von 3 mm bis 15 mm aufweist.

13. Dichtungshalter (16) nach Anspruch 11 oder 12, **dadurch gekennzeichnet, dass** dieser aus einem metallischen Werkstoff, vorzugsweise einem Stahlwerkstoff, oder aus einem Kunststoff, vorzugsweise Polyoxymethylen (POM), oder einem faserverstärkten Kunststoff, insbesondere einem kohlenstofffaserverstärkten Kunststoff besteht.

14. Dichtungshalter (16) nach einem der Ansprüche 11 bis 13, **dadurch gekennzeichnet, dass** der Dichtungshalter (16) Bohrungen (22, 23), insbesondere diesen vollständig durchdringende Bohrungen zum Einbringen von Befestigungselementen zur lösbaren Fixierung an der flüssigkeitsspeichernden Kammer aufweist.
